# EUROPÄISCHE PATENTSCHRIFT

(11) **EP 0 836 896 B1**
(45) Veröffentlichungstag und Bekanntmachung des Hinweises auf die Patenterteilung: **24.07.2002**
(21) Anmeldenummer: 97115833.2
(22) Anmeldetag: 11.09.1997
(51) Int. Cl.: B21D 5/04

(54) **Computersteuerbare Schwenkbiegemaschine**
Computer-controllable bending machine
Cintreuse pouvant être commandé par ordinateur

(30) Priorität: 18.10.1996 DE 19643146
(43) Veröffentlichungstag der Anmeldung: 22.04.1998
(73) Patentinhaber: Schechtl Maschinenbau GmbH, 83533 Edling (DE)
(72) Erfinder: Bauer, Franz, 83533 Edling (DE); Schechtl, Alois, 83533 Edling (DE)
(74) Vertreter: Hofstetter, Alfons J., Dr.rer.nat.

(56) Entgegenhaltungen:
- GB-A- 1 240 396
- PATENT ABSTRACTS OF JAPAN vol. 016, no. 057 (M-1210), 13. Februar 1992 & JP 03 254320 A (MURATA MACH LTD), 13. November 1991
- PATENT ABSTRACTS OF JAPAN vol. 016, no. 494 (M-1324), 13. Oktober 1992 & JP 04 182032 A (MURATA MACH LTD), 29. Juni 1992
- PATENT ABSTRACTS OF JAPAN vol. 017, no. 005 (M-1349), 6. Januar 1993 & JP 04 238629 A (MURATA MACH LTD), 26. August 1992
- PATENT ABSTRACTS OF JAPAN vol. 096, no. 009, 30. September 1996 & JP 08 112621 A (AMADA CO LTD), 7. Mai 1996
- PATENT ABSTRACTS OF JAPAN vol. 096, no. 009, 30. September 1996 & JP 08 112622 A (AMADA CO LTD), 7. Mai 1996
- PATENT ABSTRACTS OF JAPAN vol. 096, no. 009, 30. September 1996 & JP 08 117867 A (AMADA CO LTD), 14. Mai 1996
- PATENT ABSTRACTS OF JAPAN vol. 096, no. 009, 30. September 1996 & JP 08 117865 A (AMADA CO LTD), 14. Mai 1996
- PATENT ABSTRACTS OF JAPAN vol. 096, no. 009, 30. September 1996 & JP 08 117866 A (AMADA CO LTD), 14. Mai 1996
- PATENT ABSTRACTS OF JAPAN vol. 095, no. 007, 31. August 1995 & JP 07 088558 A (MURATA MACH LTD), 4. April 1995
- PATENT ABSTRACTS OF JAPAN vol. 017, no. 485 (P-1605), 2. September 1993 & JP 05 119818 A (MURATA MACH LTD), 18. Mai 1993
- PATENT ABSTRACTS OF JAPAN vol. 095, no. 009, 31. Oktober 1995 & JP 07 164200 A (AMADA CO LTD), 27. Juni 1995

## Beschreibung

Die vorliegende Erfindung betrifft eine computersteuerbare Schwenkbiegemaschine zum Biegen von Blechen gemäß dem Oberbegriff des Anspruchs 1. Eine Schwenkbiegemaschine mit einem an der Maschine angeordneten Rechner mit Tasten- und Anzeigefeld ist bekannt. Das Anzeigefeld besteht aus einem LCD-Bildschirm, auf dem zuvor in einem Speicher abgelegte Biegeprofile schematisch sichtbar gemacht werden können. Die für die einzelnen Biegeparameter maßgeblichen Zahlen können über das Tastenfeld eingegeben werden, ändern jedoch die Bild-Darstellung auf dem LCD-Bildschirm nicht. Lediglich die Zahlen werden angezeigt, während das Bild unverändert bleibt. Dadurch vermittelt das Bild nicht die Proportionen des eingestellten Biegeprofils.

Es ist Aufgabe der Erfindung, eine computersteuerbare Schwenkbiegemaschine mit einer flexiblen Steuerbarkeit der verschiedensten Biegeprofile verfügbar zu machen, die nicht vorher in der Maschine abgelegt sein müssen.

Die Lösung der Aufgabe ergibt sich aus dem unabhängigen Hauptanspruch.

In den Unteransprüchen sind Ausgestaltungen des prinzipiellen Erfindungsgedankens angegeben.

Mit der Erfindung wird es möglich, in einem "Eingabemodus" an der Maschine die Maschine zu programmieren, wobei das Ergebnis der einzelnen Programmierschritte in einer graphischen Oberfläche sichtbar ist. Ungewollt eingegebene, unmögliche Biegevorgänge lassen sich aufgrund der maßstabsgetreuen, nach jedem Biegevorgang aktualisierten Bildschirmdarstellung erkennen und korrigieren.

Weitere Einzelheiten, Merkmale und Vorteile ergeben sich aus der folgenden Beschreibung von zeichnerisch dargestellten Ausführungsbeispielen.

Es zeigen:
- Fig. 1:: eine schematische perspektivische Darstellung einer neuen Schwenkbiegemaschine,
- Fig. 2:: eine Aufsicht auf ein erfindungsgemäß gestaltetes Tastenfeld,
- Fig. 3 bis 5:: verschiedene graphische Oberflächen im Programmiermodus, wie sie auf einem Bildschirm dargestellt werden,
- Fig. 6 und 7:: verschiedene graphische Oberflächen im Betriebsmodus, wie sie auf einem Bildschirm dargestellt werden;
- Fig. 8:: einen Programmablaufplan beim Programmieren einer Serie von Biegevorgängen;
- Fig. 9:: einen Programmablaufplan beim Ausführen einer programmierten Serie von Biegevorgängen.

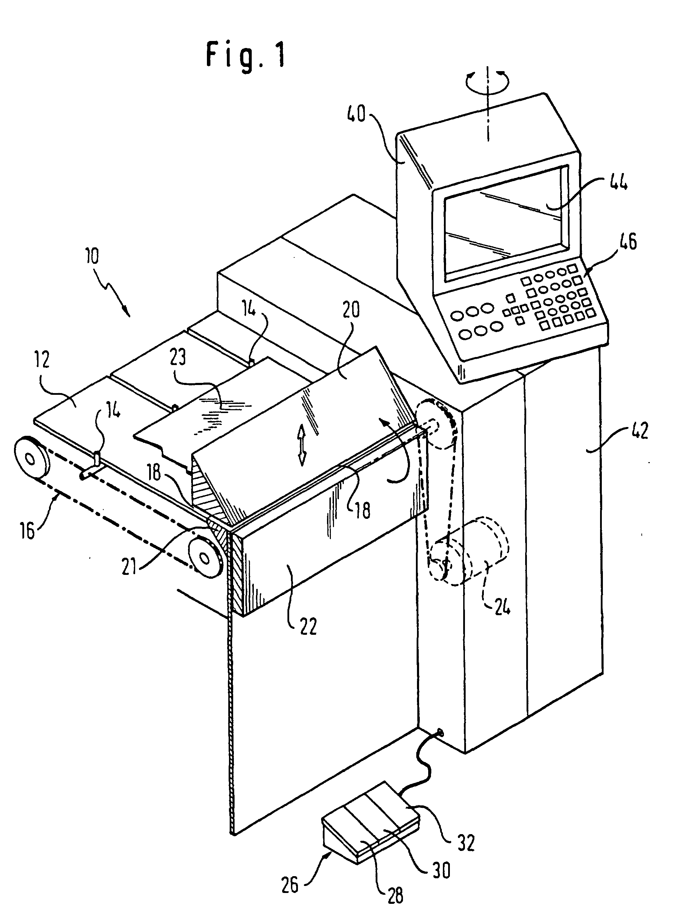

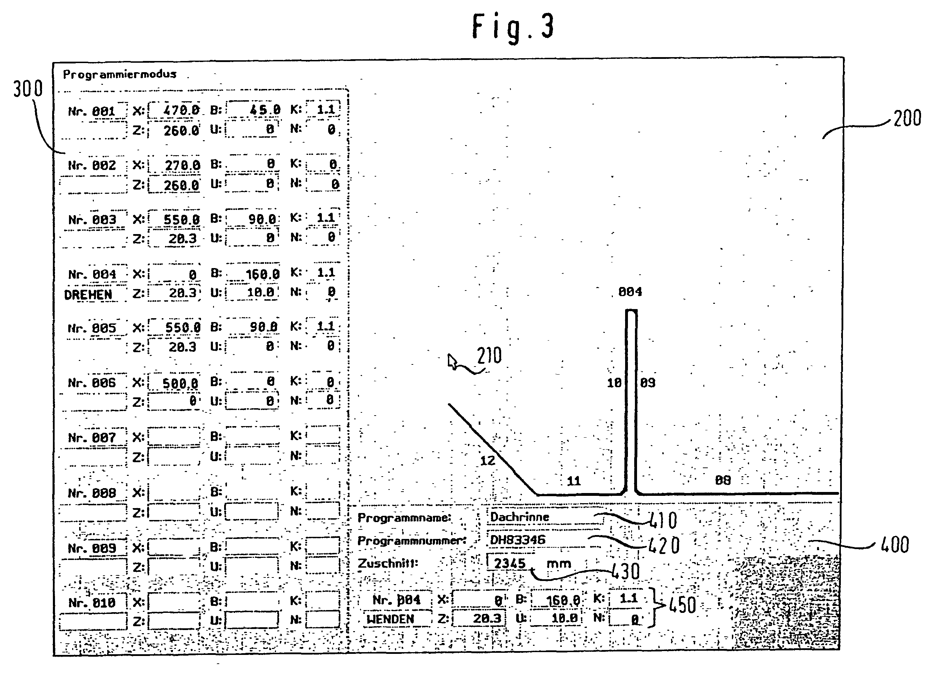

In Figur 1 ist lediglich schematisch und der besseren Verständlichkeit halber grob perspektivisch eine Schwenkbiegemaschine 10 dargestellt, um die Erfindung im Detail erläutern zu können. Ein Blech 23 aus beliebigem Material wie Eisen, Zink, Aluminium, Kupfer oder entsprechenden Legierungen, wie sie handwerklich oder industriell durch Umkanten zu verformen sind, wird auf einem Tisch 12 mit seiner rückwärtigen Kante vor Vorschubfingern 14 abgelegt. Diese mit einem Antrieb 16 verbundenen Vorschubfinger 14 können das Blech um ein eingestelltes Maß, den "Tiefenanschlag" (Fig. 3-7), in Richtung auf einen Schlitz 18 sehr genau verschieben, so daß der abzukantende Streifen des Blechs 23 durch den Schlitz 18 hindurchragt. Von einem nicht dargestellten Antrieb kann eine Klemmwange oder Oberwange 20 gehoben und gesenkt werden. Mit dieser Klemmwange 20 wird das Blech gegen ein Widerlager 21 festgehalten und eine Biegewange 22 schwenkt, angetrieben von einem Motor 24, um den gewünschten oder eingestellten Biegewinkel B, um den Streifen des Blechs 23 gegenüber dem Restblech abzukanten.

Im nicht rechnergestützten System wird die Maschine über einen Fußschalter 26 mit drei Tasten 28, 30 und 32 betätigt.

Wird beispielsweise die Taste 28 halb gedrückt, bewegt sich die Klemmwange 20 nach unten und schließt langsam den Schlitz 18. Wird die Taste 28 ganz gedrückt, kann diese Schließbewegung in jeder Stellung angehalten werden. Mit der Taste 30 kann in ähnlicher Weise die Biegewange 22 vom Bediener geschwenkt und stillgesetzt werden, während die Taste 32 beispielsweise für das Öffnen der Klemmwange 20 zu betätigen ist.

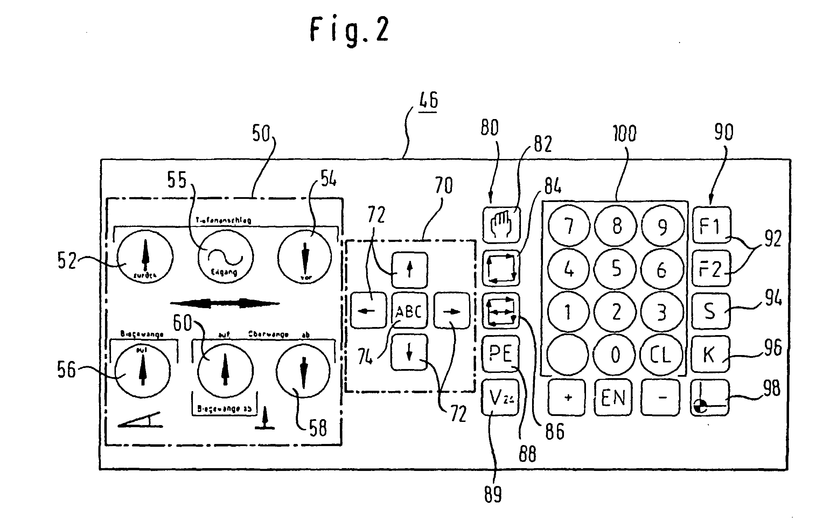

Die Maschine 10 ist erfindungsgemäß über einen Schaltkasten 42 mit einem Rechner 40 verbunden. Der Rechner 40 ist mit einem Bildschirm 44 versehen, der eine graphische Oberfläche anzeigt. Bedient wird der Rechner 40 über ein Bedienfeld 46, das anhand von Fig. 2 näher beschrieben wird.

Das Tastenfeld 46 weist mehrere Blöcke auf. Im Block 50 sind Handtasten angeordnet, die es ermöglichen, die Maschine 10 von Hand zu fahren. Der Block 70 enthält Cursortasten. Die Tastenreihen 80 und 90 weisen Funktionstasten auf und der Block 100 ist der übliche Nummernblock.

Innerhalb des Blocks 50 dienen die Tasten 52 und 54 der manuellen Steuerung des Tiefenanschlags B mittels Bewegung der Finger 14, wobei durch zusätzliches Drücken einer Taste 55 die Vor- bzw. Zurückbewegung der Finger 14 in einem Eilgang stattfindet. Die Taste 56 dient der manuellen Auslösung einer Aufwärtsbewegung der Biegewange 22 um einem Winkel B, während mit der Taste 60 zugleich eine Abwärtsbewegung der Biegewange 22 sowie eine Aufwärtsbewegung der Oberwange 20 ausgelöst wird.

Diese Doppelfunktion erklärt sich darin, daß nach ausgeführtem Biegevorgang die Klemmung des zu biegenden Blechs durch die Oberwange 20 für eine Änderung der Position des zu biegenden Blechs gelöst werden muß. Durch Drücken der Taste 58 wird eine Abwärtsbewegung der Oberwange 20 ausgelöst. Je nach Einstellung können durch diese Tasten die entsprechenden Bewegungen ausgelöst werden bzw. solange anhalten, wie der Druck auf die entsprechende Taste vorliegt. Im Block 70 sind Cursortasten 72 enthalten sowie eine mit A, B, C gekennzeichnete Taste 74, auf deren Drücken hin ein alphanumerischer Block auf dem Bildschirm 44 angezeigt wird, innerhalb dessen durch Drücken der Cursortasten 72 gewünschte Buchstaben und Zahlen ausgewählt werden können, um beispielsweise einen Programmnamen oder eine Programmnummer in die Bildschirmoberfläche einzugeben.

Die Tastenreihe 80 enthält eine Taste 82 zum Umschalten auf Handbetrieb, eine Taste 84 zum Umschalten auf Automatikbetrieb ohne Tiefenanschlag, eine Taste 86 zum Umschalten auf Automatikbetrieb mit Tiefenanschlag, eine Programmeingabetaste 88 sowie eine Taste 89 zum Einlesen bzw. Ausgeben von Daten über eine Schnittstelle, beispielsweise eine V24-Schnittstelle.

Der Block 100 enthält einen Nummernblock, über den die entsprechenden Zahlenwerte in das Programm eingegeben werden können. Mit den Funktionstasten 92 läßt sich zwischen verschiedenen Programm- und Anzeigemodi hin- und herschalten. Die Taste 94 berechnet nach erfolgter Eingabe der gewünschten Biegeabläufe den erforderlichen Zuschnitt. Die Taste 96 dient der Korrektur von Eingaben, während die Taste 98 zum Eichen der einzelnen Parameter, insbesondere des Tiefenanschlags, vorgesehen ist.

Die Eingabe von manuell durchzuführenden Schritten wie "Drehen", "Wenden" oder "Rotieren" lassen sich über die ABC-Taste in Verbindung mit den Cursortasten 72 eingeben.

Die graphische Oberfläche auf dem Bildschirm 44 kann je nach Anwahl über eine oder mehrere Funktionstasten in der Reihe 90 mehrere Darstellungen bieten, die in den Figuren 3 bis 7 wiedergegeben sind.

In den Figuren 3 bis 5 sind graphische Oberflächen wiedergegeben, wie sie auf dem Bildschirm 44 für den Programmiermodus erscheinen.

Gemäß Fig. 3 zeigt der Bildschirm 44 außerdem einen mit den Cursortasten 72 bewegbaren Cursor 210 im graphischen Fenster 200, ein Fenster 300 mit Programmierstufen Nr. 001 bis Nr. 010 und ein Informationsfenster 400.

Im Informationsfenster 400 erscheint im Feld 410 ein Programmname und im Feld 420 eine Programmnummer. In einem weiteren Feld 430 ist der vom Rechner 40 ermittelte Zuschnitt, das heißt, die Tiefe des zu verbiegenden Bleches, in "mm" angegeben. Die Felder 450 korrespondieren mit den Feldern im Fenster 300 und zeigen den gerade programmierten Schritt, im vorliegenden Beispiel Schritt Nr. 004, an.

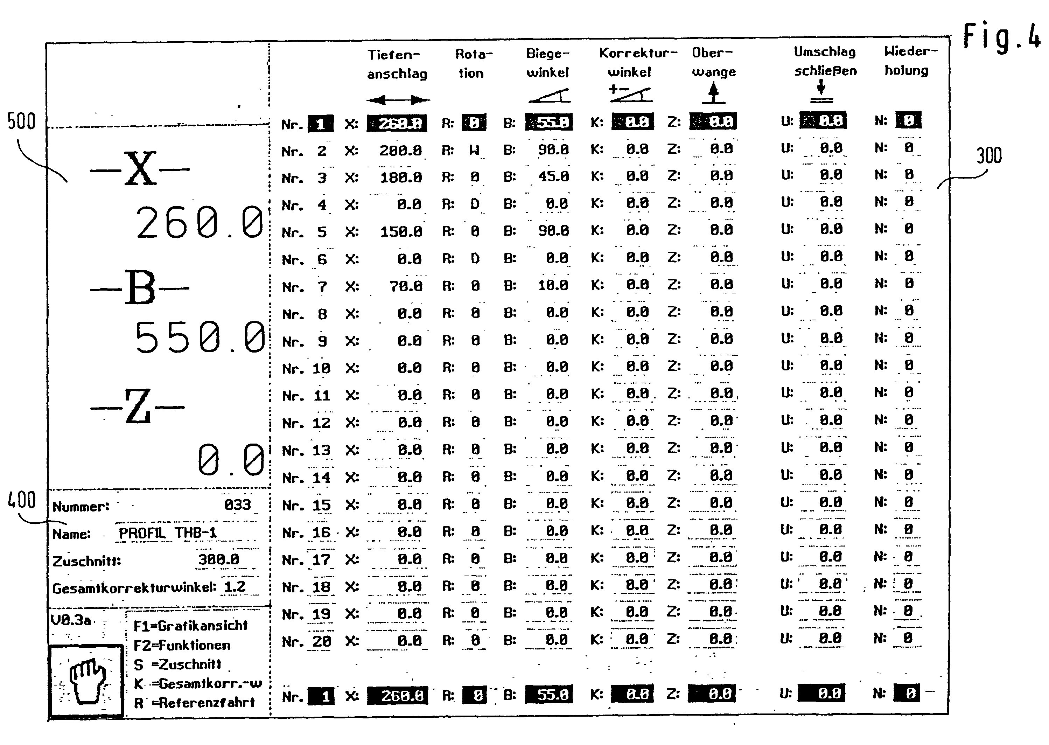

Die Felder im Fenster 300 sind
- Nr. =: ein Nummerfeld.
- X =: ein Feld für den Zuführschritt in "mm", um den das Blech von den Fingern 14 vorgeschoben wird, auch "Tiefenanschlag" (vgl. Fig. 4) genannt.
- B =: der Winkel, um den das Blech abgewinkelt wird (in Winkelgraden).
- K =: ein Korrekturwinkel, das heißt, ein (in Winkelgraden gemessener) Überwinkel, um den die Biegewange wegen bestimmter Materialeigenschaften, wie eine Rücksprungelastizität, das Blech weiter abkantet als das Sollmaß. Diese Materialeigenschaft kann erfindungsgemäß für bestimmtes Material im Speicher des Rechners abgelegt sein, so daß dieses Feld sich selbst berechnet. Selbst ein in dieser Weise berechnetes Feld kann über das Eingabefeld 46 nach empirischen Daten korrigiert oder sogleich eingegeben werden.
- Z =: die Öffnungsweite des Spaltes 18 um die der Spalt 18 nach Rückführung des Programmschrittes wieder geöffnet wird, um das abzuwinkelnde Blech durchführen zu können. Für kurze Bearbeitungszeiten ist dieser Wert möglichst dicht an den mindestens nötigen Wert zu halten.
- U =: ein Feld mit einem Maß, auf das ein gefaltetes Blech zwischen Klemmwange 20 und dessen Widerlager nach entsprechender Anlage zusammengedrückt werden soll. Dies dient der Realisierung von Biegewinkeln im Bereich von 160° - 180°, welche durch Biegen mit der Biegewange aufgrund der endlichen Ausdehnung der Oberwange sonst nur schwer zu realisieren wären.
- K =: die Anzahl der Wiederholungen des betreffenden Programmschrittes, was insbesondere die umständliche, wiederholte Eingabe identischer Biegevorgänge, wie sie beispielsweise bei der Programmierung zur Herstellung von Rundungen auftreten würden, deutlich vereinfacht.

Im Fenster 200 ist das Profil des Blechs graphisch proportional richtig dargestellt, so daß der Bediener sich schon während des Programmierens im wahrsten Sinne des Wortes "ein Bild" vom Biegevorgang machen kann, bevor dieser gestartet wird. Die Programm-Schrittnummern erscheinen ebenfalls in diesem Graphik-Fenster 200.

Gemäß Figur 4 wird die graphische Darstellung weggelassen und nur das Fenster 300, dafür in vergrößerter und etwas übersichtlicherer Darstellungsweise, wiedergegeben. Unten ist die Programmzeile unterlegt und wiederholt, die gerade bearbeitet wird (Nr. 1). In einem zusätzlichen Fenster 500 sind die wesentlichen drei Parameter X, B und Z groß sichtbar.

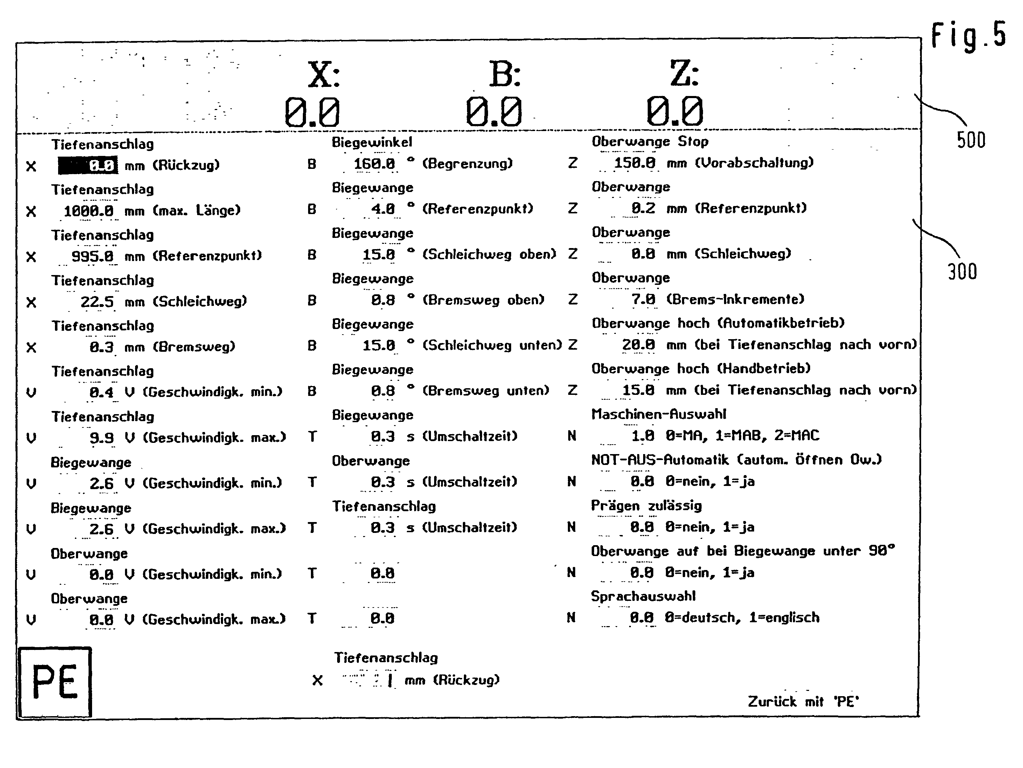

Gemäß einer anderen Funktionseinstellung auf dem Eingabefeld 46 erscheinen im Fenster 500 gemäß Figur 5 oben über einem Programmfeld 300 zusätzliche Textinformationen, mit denen die Arbeit des Bedieners noch weiter erleichtert wird.

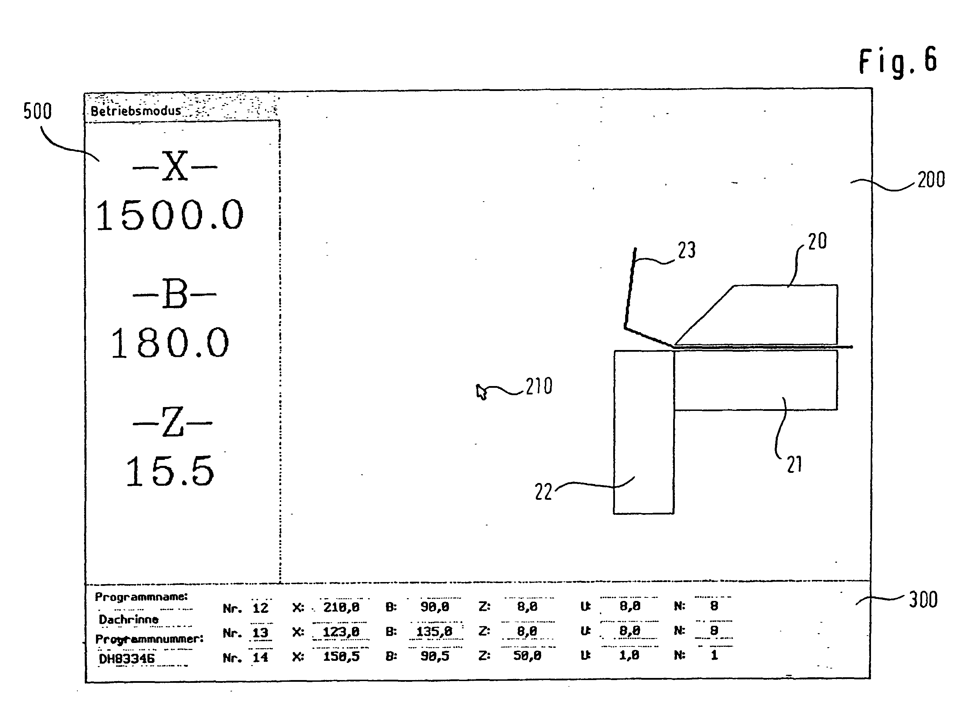

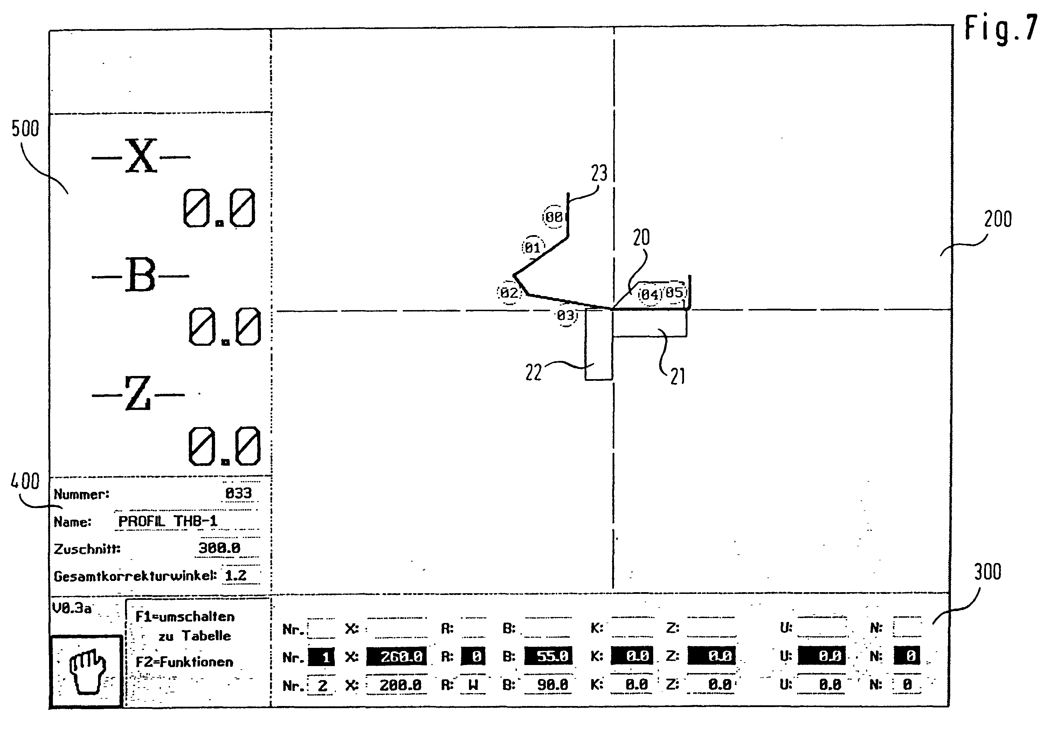

In den Figuren 6 und 7 sind zwei Betriebsmodi wiedergegeben, die verdeutlichen, daß sich die Werkzeuge der Maschine, nämlich die bewegliche Klemmwange oder Oberwange 20, das dazugehörige feste Widerlager 21 und die Biegewange 22 im graphischen Fenster 200 mitdarstellen lassen.

In der Praxis ist die graphische Darstellung auf dem Bildschirm 44 farbig, so daß die Werkzeuge 20 bis 22 gegenüber einer Darstellung 23 des Bleches farblich kontrastieren.

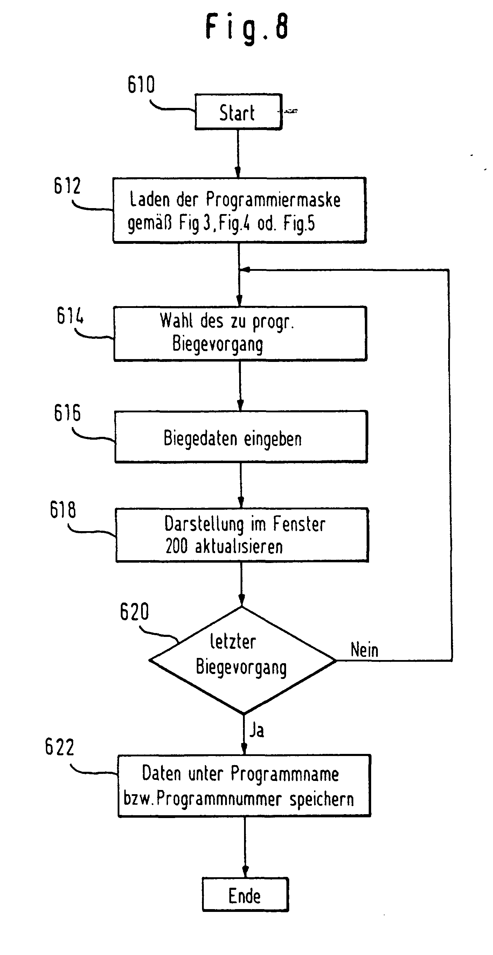

In Figur 8 ist ein Programmablaufplan für das Programmieren eines bzw. einer Serie von Biegevorgängen dargestellt. Nach dem Start im Schritt 610 wird im Schritt 612 entweder die Programmiermaske gemäß Figur 3, Figur 4 oder Figur 5 aus dem Speicher zur Anzeige auf den Bildschirm 44 geladen. Im Schritt 614 wählt die Bedienungsperson die Nummer des zu programmierenden Biegevorgangs und gibt im Schritt 616 die gewünschten Daten ein. Im Schritt 618 wird die Darstellung im Fenster 200 maßstabsgerecht aktualisiert. Die Schritte 614, 616 und 618 werden solange wiederholt, bis im Schritt 620 die Eingabe des letzten Biegevorgangs vollzogen wurde. Im Schritt 622 werden anschließend die eingegebenen Daten unter dem Programmnamen bzw. einer Programmnummer gespeichert und somit der Programmiermodus beendet.

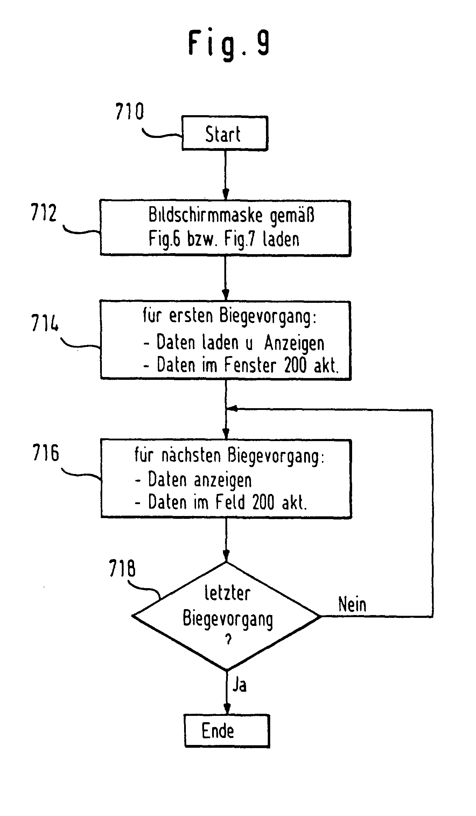

Figur 9 zeigt eine Darstellung des Programmablaufs bei der Durchführung einer bereits programmierten Serie von Biegevorgängen. Nach dem Start im Schritt 710 wird im Schritt 712 eine Bildschirmmaske gemäß Figur 6 bzw. Figur 7 aus dem Speicher geladen. Danach werden im Schritt 714 für den ersten Biegevorgang die bereits eingegebenen abgespeicherten Daten angezeigt sowie die Darstellung im Fenster 200 gemäß den Daten des ersten Biegevorgangs maßstabsgerecht aktualisiert. Insbesondere wird auch angezeigt, ob und wie das Werkstück für den nächsten Biegevorgang gewendet, gedreht oder rotiert werden muß. Danach werden im Schritt 716 die Daten für den nächsten Biegevorgang angezeigt und die Darstellung im Fenster 200 wiederum aktualisiert. Dieser Schritt wird solange wiederholt, bis im Schritt 718 der letzte Biegevorgang festgestellt wurde, wonach das Programm beendet wird.

## Patentansprüche

1. Computersteuerbare Schwenkbiegemaschine zum Biegen von Blechen mit einem mit der Maschine über eine Steuereinheit verbundenen Rechner mit einem Anzeigefeld und einem Eingabe-Tastenfeld, wobei die Maschine eine Klemmwange (20), eine Biegewange (22) und ein Widerlager (21) für die Klemmwange (20) aufweist,
**dadurch gekennzeichnet,**
**daß** der Rechner (40) von einem Programmiermodus auf einen Betriebsmodus umschaltbar ist,
wobei im Programmiermodus die Parameter zumindest für einen Tiefenanschlag (X), einen Biegewinkel (B) und eine Klemmwangenbewegung (Z) numerisch einstellbar und proportional zu den eingegebenen Parametern als maßstabsgetreue schematische Wiedergabe des Biegeprofiles auf einem Bildschirm (44) darstellbar sind, wobei im Programmiermodus weiterhin eine Öffnung des Spaltes (18; Z) unter der Klemmwange (20) nur entsprechend der Durchlaßhöhe des zuvor hergestellten Biegeprofils ein**stellbar ist,**
während im Betriebsmodus zusätzlich zu dem Biegeprofil auf dem Bildschirm (44) und zeitgerecht mit dem Betriebsablauf der Maschine (10) die jeweilige Stellung der Klemmwange (20), der Biegewange (22) und des Widerlagers (21) schematisch darstellbar ist.

2. Schwenkbiegemaschine nach Anspruch 1,
**dadurch gekennzeichnet,**
**daß** im Programmiermodus zusätzlich zur Einstellung des Tiefenanschlags (X) und des Biegewinkels (B) eine Pause für Manipulation wie Drehen oder Wenden des Bleches von Hand oder zum anschließenden Schließen (U) eines offenen Biegeprofils durch Absenken der Klemmwange (20) einstellbar ist.

3. Schwenkbiegemaschine nach Anspruch 1 oder 2,
**dadurch gekennzeichnet,**
**daß** im Programmiermodus zu jeder Biegewinkeleinstellung (B) ein Korrekturwinkel (K) eingebbar ist, der Materialeigenschaften, wie eine elastische Rückbiegung, berücksichtigt.

4. Schwenkbiegemaschine nach einem der vorhergehenden Ansprüche,
**dadurch gekennzeichnet,**
**daß** die Öffnung des Spaltes (18; Z) unter der Klemmwange (20) vorgebbar ist durch automatische Berechnung durch den Rechner im Hinblick auf das zuvor hergestellte Biegeprofil oder durch manuelle Eingabe über das Tastenfeld (46).

5. Schwenkbiegemaschine nach einem der vorhergehenden Ansprüche,
**dadurch gekennzeichnet,**
**daß** im Programmiermodus jeder Schritt für beliebig häufige Wiederholungen (W) einstellbar ist.

6. Schwenkbiegemaschine nach einem der vorhergehenden Ansprüche,
**dadurch gekennzeichnet,**
**daß** der Rechner die Länge des Blechzuschnittes errechnet.

7. Schwenkbiegemaschine nach einem der vorhergehenden Anprüche,
**dadurch gekennzeichnet,**
**daß** der Bildschirm (44) ein Farbbildschirm ist.

## Claims

1. Computer-controllable bending machine for bending metal sheets, with a computer having a display and an input keyboard, which computer is connected to said machine via a control unit, the machine having a clamping cheek (20), a bending cheek (22) and an abutment (21) for the clamping cheek (20),
wherein
the computer (40) is capable of being switched from a programming mode to an operational mode,
whereby in the programming mode, at least the parameters for a bit gauge (X), a bending angle (B) and a movement (Z) of the clamping cheek may be set numerically and displayed proportionally to the input parameters on a screen (44) as a true-to-sale schematical representation of the bending profile, whereas furthermore in the programming mode an opening of the gap (18; Z) below the clamping cheek (20) may only be set in accordance with the required passing height of the previously produced bending profile,
whereas in the operational mode, the respective position of the clamping cheek (20), the bending cheek (22) and the abutment (21) may schematically be displayed on the screen (44) in addition to the bending profile and in timed correlation to the operating status of the machine (10).

2. Bending machine according to claim 1,
wherein
in the programming mode a pause for manipulations such as turning the metal sheet over or around by hand or for subsequently closing (U) an open bending profile by lowering the clamping cheek (20) may be set in addition to the setting of the bit gauge (X) and the bending profile (B).

3. Bending machine according to claim 1 or 2,
wherein
in the programming mode a correction angle (K) may be inputted to each setting of a bending angle (B), said correction angle taking into consideration material properties such as an elastic rebound.

4. Bending machine according to one of the preceding claims,
wherein
the opening of the gap (18; Z) below the clamping cheek (20) may be set by the computer as a computer-calculated value in accordance with the previously produced bending profile or by manually entering via the keyboard (46).

5. Bending machine according to one of the preceding claims,
wherein
in the programming mode each step may be set for any desired number of repetitions (W).

6. Bending machine according to one of the preceding claims,
wherein
the computer calculates the dimensions of the cut of the metal sheet.

7. Bending machine according to one of the preceding claims,
wherein
the screen (44) is a colour screen.

## Revendications

1. Cintreuse pouvant être commandée par ordinateur pour plier des tôles, comprenant un ordinateur avec un panneau de visualisation et un panneau de touches d'entrée, lequel ordinateur est relié à la machine par l'intermédiaire d'un contrôleur, la machine comprenant une jumelle de serrage (20), une jumelle de pliage (22), et un contre-appui (21) pour la jumelle de serrage (20),
**caractérisée en ce que**
l'ordinateur (40) peut être commuté d'un mode de programmation à un mode opératoire,
les paramètres dans le mode de programmation pouvant être ajustés numériquement au moins pour une butée de profondeur (X), un angle de pliage (B) et un mouvement (Z) de la jumelle de serrage et pouvant être représentés proportionnellement aux paramètres entrés en tant que reproduction fidèle à l'échelle et schématique du profil de pliage sur un écran de visualisation (44), une ouverture de la fente (18 ; Z) en-dessous de la jumelle de serrage (20), dans le mode de programmation, ne pouvant être ajusté que correspondant à la hauteur de passage du profil de pliage fabriqué auparavant,
tandis que dans le mode opératoire, supplémentairement au profil de pliage, la position respective de la jumelle de serrage (20), de la jumelle de pliage (22) et du contre-appui (21) peut être représentée de manière schématique sur l'écran de visualisation (44) et conforme au temps du déroulement opératoire de la machine (10).

2. Cintreuse selon la revendication 1,
**caractérisée en ce que** dans le mode de programmation, supplémentairement à l'ajustage de la butée de profondeur (X) et l'angle de pliage (B), un arrêt peut être ajusté pour des manipulations comme la rotation manuelle ou le renversement manuel de la tôle ou pour la fermeture (U) suivante d'un profil ouvert par l'abaissement de la jumelle de serrage (20).

3. Cintreuse selon la revendication 1 ou 2,
**caractérisée en ce que** dans le mode de programmation, pour chaque ajustage d'angle de pliage (B) un angle correctif (K) peut être fixé qui prend en considération des qualités du matériau comme un repli arrière élastique.

4. Cintreuse selon l'une quelconque des revendications précédentes,
**caractérisée en ce que** l'ouverture de la fente (18 ;Z) en-dessous de la jumelle de serrage (20) peut être fixée à l'avance par le calcul automatique de l'ordinateur compte tenu du profil de pliage fabriqué auparavant, ou par l'entrée manuelle à partir du panneau de touches (46).

5. Cintreuse selon l'une quelconque des revendications précédentes,
**caractérisée en ce que** dans le mode de programmation, chaque étape peut être ajustée pour des répétitions à une fréquence désirée.

6. Cintreuse selon l'une quelconque des revendications précédentes,
caractérisée en ce l'ordinateur calcule la longueur de la coupe de la tôle.

7. Cintreuse selon l'une quelconque des revendications précédentes,
**caractérisée en ce que** l'écran de visualisation (44) est un écran couleur.
